# EUROPEAN PATENT SPECIFICATION

(11) **EP 0 664 669 B1**
(45) Date of publication and mention of the grant of the patent: **10.02.1999**
(21) Application number: 93921954.9
(22) Date of filing: 14.10.1993
(51) Int. Cl.: A23B 4/044, B65D 81/28

(54) **A BAG FOR CURING FOOD**
BEUTEL ZUR NAHRUNGSMITTEL REIFUNG
SACHET POUR CUISSON DE PRODUITS ALIMENTAIRES

(30) Priority: 19.10.1992 FI 920621 U; 12.02.1993 FI 930615
(43) Date of publication of application: 02.08.1995
(73) Proprietor: TIRKKONEN, Tapani, SF-73620 Kortteinen (FI)
(72) Inventor: TIRKKONEN, Tapani, SF-73620 Kortteinen (FI)
(74) Representative: Pitkänen, Hannu Alpo Antero
(86) International application number: FI9300417
(87) International publication number: WO9408461

(56) References cited:
- EP-A- 0 300 809
- EP-A- 0 335 478
- EP-A- 0 444 917
- US-A- 4 596 713

## Description

The present invention relates to a bag for curing food which will be placed into the bag, said bag been made from a heat-resistant foldable material, preferably from metal foil or paper or similar material coated with a metal film.

To heat sausages and other meat products, so-called roasting bags are used by placing them on a glowing bed of coals or in a fireplace. Such bags are only employed for heating food.

Fish and meat are smoke-cured in a variety of smoking units, smoking boxes, containers and such. Such accessories provide a closeable space incorporating a grate or similar support on which the fish or meat to be smoke-cured is placed. To generate a smoke-filled atmosphere, small chips of appropriate wood are placed on the bottom of the smoking space, where they smoulder and thus provide a desirable flavor and look to the meat or fish. Smoking boxes and similar appliances are relatively expensive, heavy and large in size. Their transport from one place to another is difficult. For example, on fishing trips one can never be certain of catching anything, and therefore, carrying smoking appliances around is clumsy, so they are usually left behind.

Food is generally flavored by marinating in a spiced solution or through spreading or sprinkling spice(s) on their surface. Marinating is time-consuming, and sprinkling of the spice fails to spread the spice evenly.

It is an object of the invention to provide a bag for curing food, said bag being capable of overcoming the drawbacks of conventional methods and appliances. In particular, it is an object of the invention to achieve a bag suited to give food a desired flavor and provide fast and efficient smoke-curing of food. It is a further object of the invention to provide a bag of cost-efficient production, simple structure, light weight, foldability into small size and ease-of-use.

The goal of the invention is achieved by a bag characterized by what is stated in the annexed claims.

The bag according to the invention is prefilled with a material suited to impart the desired flavor. The bag material may be any known heat-resistant material suited for making bags such as a metal foil or paper or similar material coated with a metal film. As the material is thin, the bag is light and cost-efficient to produce. The bag is foldable, permitting storage in small space and easy transportation. The material which is placed into the bag to release the flavoring gas is a suitable material which generates a non-toxic gas. As the food is placed into the bag and the bag is heated, also the material contained in the bag is heated. The gas released from the material is mixed into the atmosphere surrounding the food and absorbed into the food. Simultaneously, the inherent taste of the food is preserved. Through proper choice of the material inserted in the bag, the inherent taste of the food can even be enhanced, or alternatively, affected in a desired manner. The bag is suited for producing various kinds of foods.

In a preferred application of the invention, one or more intermediate walls are placed to the interior of the bag, and the gas-generating material is placed between said intermediate wall and the bag outer wall. The intermediate wall is made of a suitable material having such holes that permit the penetration of the gas via the holes into the actual bag space containing the fish or meat or other food stuff. Adherence of the food to the intermediate wall is prevented, yet permitting fat released by the food to flow through the holes into the intermediate space.

In another preferred embodiment of the invention, at least one inner wall of the bag has the gas-generating material attached. Such a material can be, e.g., a thin slice of wood veneer or other suitable material. Such a slice of material can be attached to one ore more inner walls of the smoke-curing bag. The size of the slices can be varied appropriately according to the application. For instance, one wall can have several slices spaced by a small distance from each other, whereby the bag can be easily folded at the spaces between the slices. This approach provides a bag which folds into a small volume for transportation and storage.

In another embodiment of the invention, wood material is placed to the interior of the hag, whereby the bag operates as a smoke-curing bag. For this purpose, several different wood materials can be appropriately employed. The wood material can be contained in the bag in crushed, chipped, sliced or other form. In another preferred embodiment, different kinds of flavor or color imparting materials or spices or the like materials are placed into the bag for generating the gas. Moreover, both wood materials and flavor imparting materials and/or spices can be placed into the bag.

In the following, the invention is explained in greater detail with reference to the annexed drawing, in which
Figure 1 shows an embodiment of the bag according to the invention in a cross-sectional side view when folded flat, and
Figure 2 shows the bag illustrated in Fig. 1 in a cross-sectional side view when opened for use.

According to the diagrams, the bag is a bag 1 made from a metal foil or similar material. The bag is sealed at its edges by a heat-resistant sealing method. In the diagrams the upper part 4 is provided with folded sides 5. The fold is sealed at its lower edges to the lower part 6 of the bag.

The lower part 6 has attached to it an intermediate bottom 2 acting as the intermediate wall, and placed to the space 3 remaining between the intermediate bottom and the wall of the lower part, an amount of wood material, advantageously crushed alder for instance, and sugar. The intermediate bottom is made of the same material as the bag proper, however, punched to have a plurality of holes. In some embodiments the bag can be made of a different material, since the intermediate bottom need not tolerate as high temperatures as the material of the bag proper.

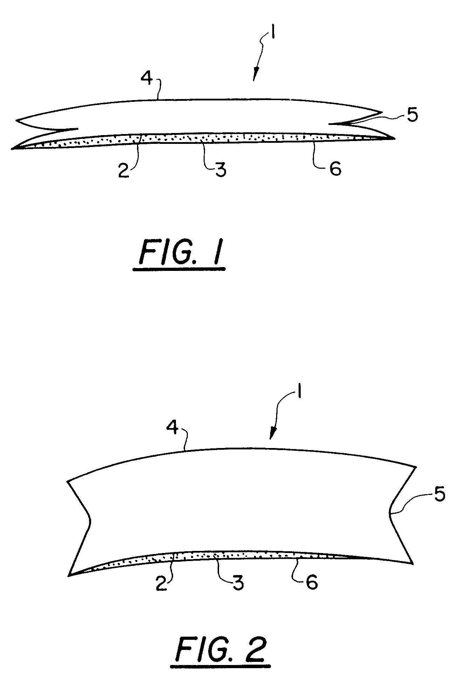

When folded (Fig. 1), the bag acts as a conventional bag by being foldable into a small and easy-to-carry size. For use, the mouth of the bag is opened and its interior is shaped with hand for desired size by unfolding the folds. Fish or meat to be cured for food is inserted over the intermediate bottom, the mouth of the bag is closed tightly by, e.g., rolling the mouth of the bag, and the bag is placed over open fire, smoldering fire or any other source of heat, or to the vicinity thereof. At the heating of the bag, with resultant curing of the fish or meat, the wood material is rapidly charred and the smoke released enters the bag interior proper containing the fish or meat via the holes in the intermediate bottom.

Afier smoke-curing, the meat or fish is prepared for serving by, e.g., opening the bag from above using scissors or a knife, for instance, and unfolding the cut edges to the sides. Thus, the meat or fish is attractively displayed on the intermediate bottom, ready to eat.

## Claims

1. A bag made for curing food which will be placed into the bag, said bag (1) being made from a heat-resistant, foldable material, preferably from metal foil or paper or similar material coated with a metal film, the interior of the bag (1) is provided with at least one intermediate bottom (2) over which the food to be cured is arranged to be inserted, **characterized** in that the space remaining between said intermediate bottom and the bag wall is provided with wood material.

2. A bag as defined in claim 1, **characterized** in that wood material is placed onto at least one of the inner walls of the bag.

3. A bag as defined in claim 1, **characterized** in that the space remaing between said intermediate bottom and the bag wall is provided also with spice.

4. A bag as defined in one of the claims 1-3, **characterized** in that the intermediate bottom (2) is made of the same material as the bag proper and punched to have a plurality of holes.

## Patentansprüche

1. Ein Beutel, der zum Räuchern von Nahrungsmitteln dient, die in den Beutel eingelegt werden, wobei der besagte Beutel (1) aus einem hitzebeständigen, faltbaren Material, vorzugsweise aus Metallfolie oder Papier oder gleichartigem Material, das mit einem Metallfilm beschichtet ist, gefertigt ist, das Innere des Beutels (1) mit mindestens einem Zwischenboden (2) ausgestattet ist, über welchem die zu räuchernde, einzulegende Nahrung angeordnet wird, dadurch **gekennzeichnet**, dass Holzmaterial, in den zwischen dem genannten Zwischenboden und der Beutelwand verbleibenden Raum eingebracht wird.

2. Ein Beutel nach Anspruch 1, dadurch **gekennzeichnet**, daß das Holzmaterial an mindestens einer der Innenwände des Beutels angeordnet wird.

3. Ein Beutel nach Anspruch 1, dadurch **gekennzeichnet**, daß auch Gewürz in den zwischen dem genannten Zwischenboden und der Beutelwand verbleibenden Raum eingebracht wird.

4. Ein Beutel nach einem der Ansprüche 1 - 3, dadurch **gekennzeichnet**, daß der Zwischenboden (2) aus demselben Material wie der eigentliche Beutel gefertigt sowie perforiert ist, um eine Viezahl von Löchern zu besitzen.

## Revendications

1. Un sac destiné pour la préparation des produits alimentaires qui seront placés dans le sac, ledit sac (1) étant fabriqué en matière résistante à la chaleur et pliable, de préférance en feuil de métal ou bien en papier ou en matière similaire revêtue d'une membrane métallique, l'intérieur du sac (1) étant muni au moins d'un double fond (2) sur lequel les produits alimentaires à préparer doivent être posés, **caractérisé** en ce que l'espace entre ledit double fond et la paroi du sac est pourvu de matière de bois.

2. Un sac selon la revendication 1, **caractérisé** en ce qu'il y a de la matière de bois au moins sur la surface d'une des parois interieures du sac.

3. Un sac selon la revendication 1, **caractérisé** en ce que l'espace entre ledit double fond et la paroi du sac est également pourvu d'épice.

4. Un sac selon l'une des revendications de 1 à 3, **caractérisé** en ce que le double fond (2) est fabriqué de la même matière que le sac lui-même et contient un grand nombre de perforations.
